# EUROPÄISCHE PATENTANMELDUNG

(11) **EP 1 582 862 A1**
(43) Veröffentlichungstag der Anmeldung: **05.10.2005**
(21) Anmeldenummer: 04008020.2
(22) Anmeldetag: 01.04.2004
(51) Int. Cl.: G01N 21/71, G01N 33/20, G01N 1/08, F01D 5/00

(54) **Verfahren und Vorrichtung zur Diagnose eines betriebsbeanspruchten Bauteils**

(71) Anmelder: SIEMENS AKTIENGESELLSCHAFT, 80333 München (DE)
(72) Erfinder: Feldhege, Martin, 12203 Berlin (DE)

(57) **Zusammenfassung**

Die Erfindung betrifft ein Verfahren zur Untersuchung von betriebsbeanspruchten Bauteilen (4) und eine zugehörige Vorrichtung (2). Erfindungsgemäß wird mindestens eine Testbohrung (11) in das betriebsbeanspruchte Bauteil (4) eingebracht, die Zusammensetzung von bei der Testbohrung (11) entstehenden Bohrungsrückstände (14) analysiert und die Dicke und/oder Alterung und/oder der Zustand der durchbohrten Bauteilschichten (S1 bis Sn) ermittelt.

## Beschreibung

Die Erfindung betrifft ein Verfahren gemäß Anspruch 1 und eine Vorrichtung gemäß Anspruch 2 zur Diagnose eines betriebsbeanspruchten Bauteils, z. B. einer Turbinenschaufel einer Gas- oder Dampfturbine.

Im bestimmungsgemäßen Betrieb einer Kraftwerksanlage, z. B. einer Gasturbinen- und/oder einer Dampfturbinenanlage, kommt es an Bauteilen, insbesondere an Turbinenschaufeln, zu hohen mechanischen Beanspruchungen, z. B. Biegewechsel- und Fliehkraft-Beanspruchungen, und/oder thermischen Beanspruchungen, z. B. durch heiße Gase, aber auch zu einer Beanspruchung durch Erosion, z. B. durch verunreinigte Luft oder durch Verbrennungsrückstände, wodurch ein Verschleiß und eine schnelle Alterung der Bauteile bedingt ist. Für einen sicheren Betrieb der Kraftwerksanlage ist es daher üblich, in einem Wartungs- oder Servicezyklus ein Referenzbauteil, insbesondere eine Referenz-Turbinenschaufel, zu entnehmen und hinsichtlich des Zustands zu untersuchen.

Die Bestimmung des Zustandes einer solchen bereits betriebsbeanspruchten Turbinenschaufel erfolgt dabei irreparabel. D. h. die Turbinenschaufel ist nach eingehender Untersuchung nicht wieder verwendbar. Beispielsweise werden Referenzbauteile zerstörend metallographisch untersucht. Zudem ist aufgrund von individuellen Bauteileigenschaften, welche häufig durch Fertigungsschwankungen verursacht sind, ein Rückschluss vom analysierten Referenzbauteil auf die Gesamtheit der anderen Bauteile nur schwer möglich.

In der DE 40 28 043 A1 werden ein Verfahren und eine Vorrichtung zur Analyse und Bestimmung der Konzentration von Elementen im Oberflächenbereich von Objekten beschrieben. Dabei wird das Objekt an dessen Oberfläche äußerlich unter Anwendung eines Zerstäubungs- oder Verdampfungsverfahrens abgetragen und unmittelbar nachfolgend an einen Messort überführt und mittels der Totalreflexions-Röntgenfluoreszenzanalysemethode im Abtragbereich der Objektfläche untersucht.

In der DE 43 04 612 C2 wird ein Verfahren zur kontinuierlichen Messung der stofflichen Zusammensetzung des Dampfes einer Schmelze oder eines zu verdampfenden Materials im Vakuum beschrieben.

Aufgabe der Erfindung ist es, ein Verfahren zur Diagnose eines betriebsbeanspruchten Bauteils anzugeben, welches dessen bestimmungsgemäße Funktion nicht beeinträchtigt. Des Weiteren ist eine besonders zur Durchführung des Verfahrens geeignete Vorrichtung anzugeben.

Die Erfindung löst diese Aufgabe durch Bereitstellung eines Verfahrens zur Diagnose eines betriebsbeanspruchten Bauteils mit den Merkmalen des Patentanspruchs 1 und durch eine zugehörige Vorrichtung zur Diagnose eines betriebsbeanspruchten Bauteils mit den Merkmalen des Patentanspruchs 12.

Vorteilhafte Ausführungsformen und Weiterbildungen der Erfindung sind in den abhängigen Ansprüchen angegeben.

Die Erfindung geht dabei von der Überlegung aus, dass die Diagnose eines betriebsbeanspruchten Bauteils zwar gegebenenfalls mit dessen Ausbau, aber ohne Zerstörung des Bauteils ermöglicht sein sollte. Dazu sollte eine möglichst einfache und aussagekräftige Prüfung oder Untersuchung des Bauteils vorgenommen werden, welche eine Beurteilung des aktuellen Zustands des Bauteils ermöglicht. Das Verfahren beruht auf der Idee, mindestens eine Testbohrung an einem betriebsbeanspruchten Bauteil vorzunehmen und anhand der Zusammensetzung von bei der Testbohrung entnommenen Bohrungsrückständen, z. B. von entstehenden Materialdämpfen, mindestens einen Zustandsparameter zu bestimmen. Die mindestens eine Testbohrung wird so ausgeführt, dass das Bauteil nicht in seiner Funktion beeinträchtigt wird.

Insbesondere wird für die Abbildung der Beanspruchung des Bauteils als Zustandsparameter die Dicke einer das Bauteil charakterisierenden Werkstoffschicht bestimmt. Bei einem als Turbinenschaufel ausgebildeten Bauteil ist der Schichtenaufbau abhängig von der Funktion, der Verwendung und der Anordnung der Turbineschaufel. Beispielsweise ist eine Turbinenschaufel aus einem Grundwerkstoff, z. B. einer Metallkeramikschicht mit hohem Reinaluminiumanteil, aus einer Diffusionsschicht, z. B. Titannitride bzw. Titancarbonitride, und aus einer Aufbauschicht, z. B. einer Chromschicht, gebildet. Alternativ kann die Turbinenschaufel aus einer Deckschicht, z. B. Chromat-Phosphat-Verbindung, einer Grundschicht, z. B. aus einer Chromat-Phosphat-Verbindung mit Aluminiumpulver, und einem Grundwerkstoff, z. B. Metallkeramikschicht mit hohem Reinaluminiumanteil, gebildet sein. Auch kann der Schichtenaufbau für eine Turbinenschaufel eine Auflageschicht aus Nickel, Chrom, Aluminium, Yttrium, Silizium und/oder Kobalt, eine Mikrodiffusionsschicht zwischen der Auflageschicht und dem Grundwerkstoff nach erfolgter Anbindungswärmebehandlung und den Grundwerkstoff selbst umfassen. Je nach Werkstoffart oder Schichtenaufbau weist die jeweilige Bauteilschicht eine zugehörige Schichtdicke von 10 µm bis 20 µm, von 20 µm bis 30 µm, von 30 µm bis 60 µm, von 80 µm bis 120 µm und/oder von 180 µm bis 350 µm auf.

Insbesondere durch die unterschiedliche mechanische und/oder thermische Beanspruchung der einzelnen Werkstoffschichten, beispielsweise werden die innenliegenden Werkstoffschichten weniger stark beansprucht wie die äußere Auflage- oder Aufbauschicht, kann anhand der ermittelten Dicke der jeweiligen Werkstoffschicht eine Aussage über den Alterungszustand der Turbinenschaufel und deren Funktions- und Betriebstüchtigkeit ermittelt werden. Unterschreitet beispielsweise eine der Werkstoffschichten einen Mindestwert für einen oder mehrere Zustandsparameter, z. B. für die Dicke, so ist die Turbinenschaufel nicht funktionsfähig oder betriebsfähig. Liegt hingegen der ermittelte Wert für die Dicke der betreffenden Werkstoffschicht in einem Toleranzbereich oder zulässigen Bereich für den betreffenden Zustandsparameter, so ist die Turbinenschaufel wieder verwendbar.

Alternativ oder zusätzlich kann als Zustandsparameter die Alterung, insbesondere die Änderung spezifischer Stoffeigenschaften einer das Bauteil charakterisierenden Werkstoffschicht, ermittelt werden. Darüber hinaus kann als Zustandsparameter die Beschaffenheit, insbesondere Zustand und Form des Werkstoffs, z. B. Rauheit, Unebenheit, Stoffstruktur, einer das Bauteil chärakterisierenden Werkstoffschicht ermittelt werden. Dabei werden für den jeweiligen Zustandsparameter Grenzwerte und/oder Toleranzbereiche vorgegeben, anhand derer dann der Zustand des Bauteils, z. B. einer Turbinenschaufel, bestimmt wird.

Zweckmäßigerweise werden mittels der Testbohrung die Bohrungsrückstände schichtenbezogen in Bauteilschichten und/oder Werkstoffschichten entnommen. Beispielsweise ist ein Bauteil nur aus einem Werkstoff gebildet, so wird die Testbohrung durch das Bauteil mit einer schichtweisen Entnahme des Werkstoffs durchgeführt. Alternativ kann bei einem aus mehreren in Werkstoffschichten aufgebauten Bauteil die Testbohrung mit einer Entnahme je Werkstoffschicht durchgeführt werden.

Je nach Bauteilart können mittels der Testbohrung die Bohrungsrückstände für die jeweilige Bauteilschicht und/oder Werkstoffschicht mit einer Dicke von 0,5 µm bis 1 µm entnommen werden. D.h. in Abhängigkeit von der Dicke der Werkstoffschicht erfolgt bei einer weitgehend die gleiche Dicke aufweisenden Werkstoffschicht eine einzige Entnahme, alternativ kann bei einer größeren Dicke der Werkstoffschicht diese wiederum schichtweise analysiert werden, indem die Proben mit einer maximalen Schichtdicke von 0,5 µm bis 1 µm entnommen werden.

In Abhängigkeit vom Bauteiltyp wird die Testbohrung mit einem Durchmesser von 100 µm bis 500 µm eingebracht. Der Bohrungsdurchmesser kann aber beliebig variieren und hängt maßgeblich vom Bauteiltyp und der Beanspruchung des Bauteils ab. Die Testbohrung ist insbesondere derart zu bemessen, dass eine Wiederverwendung auch bei gegebener Beanspruchung des Bauteils möglich ist.

Die Zahlenangaben sind nur beispielhaft.

Die Testbohrung kann sich teilweise durch die erste äußere Schicht, größtenteils durch die erste äußere Schicht ganz durch die äußerste Schicht und teilweise durch die gegebenenfalls vorhandene Zwischenschicht oder durch die Schichten bis zum Grundwerkstoff erstrecken.

Vorzugsweise wird die Testbohrung mittels eines Lasers oder eines Elektronenstrahls oder mittels eines Sputterverfahrens, d. h. durch einen Ionenstrahl, in das Bauteil eingebracht. Hierdurch ist eine sehr genaue und sichere Bohrung und deren Abmessung hinsichtlich Tiefe, Durchmesser und Form möglich.

Für eine möglichst einfache und möglichst genaue Diagnose des Bauteils werden die je Bauteilschicht und/oder Werkstoffschicht entnommenen, insbesondere abgesputterten oder verdampften Bohrungsrückstände fortlaufend analysiert. Insbesondere werden die je Bauteilschicht und/oder Werkstoffschicht entnommenen Bohrungsrückstände tiefenabhängig mittels Spektroskopie analysiert. Vorzugsweise wird das Verfahren zur Diagnose automatisch ausgeführt. D. h. die fortlaufend entnommenen Bohrungsrückstände werden schichtenbezogen auf einen oder mehrere Zustandsparameter untersucht, anhand derer dann auf die Funktionstüchtigkeit des Bauteils geschlossen wird. Das hier beschriebene Verfahren eignet sich insbesondere zur Diagnose einer hohen Beanspruchungen ausgesetzten Turbinenschaufel, welche aufgrund der hohen Herstellungskosten und des bei einer möglichen Funktionsuntüchtigkeit entstehenden Schadens zerstörungsfrei auf den Zustand prüfbar sein sollte.

Die Vorrichtung zur Diagnose eines betriebsbeanspruchten Bauteils weist vorzugsweise eine Bohrvorrichtung zum Durchführen mindestens einer Testbohrung und einen Detektor zur Aufnahme von bei der Testbohrung entstehenden Bohrungsrückständen, z. B. Werkstoffspänen und/oder Materialdämpfen, sowie eine Auswerte- und Steuereinheit zur Ermittlung mindestens eines Zustandsparameters des Bauteils anhand der Zusammensetzung von bei der Testbohrung entnommenen Bohrungsrückständen auf.

Um die Funktion des untersuchten Bauteils nicht zu beeinträchtigen, wird mittels der Bohrvorrichtung eine Testbohrung mit einem Durchmesser von 100 µm bis 500 µm in das Bauteil eingebracht. Als Bohrvorrichtung eignet sich insbesondere eine Lasereinheit, eine Elektronen- und/oder Ionenstrahleinrichtung, mittels welcher ein Laserstrahl, ein Elektronenstrahl bzw. ein Ionenstrahl zur Ausführung der Testbohrung erzeugt wird. Die Analyse- und Steuereinheit ist zweckmäßigerweise für eine schichtweise Analyse als ein Spektrometer ausgebildet. Dabei kann anhand von als Bohrungsrückstände beispielsweise entnommenen Bohrungsrückständen, z. B. Werkstoffspänen und/oder Materialdämpfen, die Dicke und/oder die Alterung und/oder der Zustand der durchbohrten Bauteilschichten und/oder Werkstoffschichten ermittelt werden. Aus der ermittelten aktuellen Dicke und/oder der Alterung und/oder dem Zustand der jeweiligen Bauteilschicht und/oder Werkstoffschicht lassen sich in vorteilhafter Weise Restlebensdauer und/oder erforderliche Reparaturumfänge bestimmen. Die mindestens eine Testbohrung wird vorzugsweise an einer oder mehreren Stellen durchgeführt, die besonders beansprucht werden.

Die mit der Erfindung erzielten Vorteile bestehen insbesondere darin, dass mittels einer Testbohrung in ein betriebsbeanspruchtes Bauteil und der Analyse der Zusammensetzung der bei der Testbohrung entnommenen Bohrungsrückstände auf mindestens einen Zustandsparameter des Bauteils dieses dahingehend zerstörungsfrei geprüft wird, dass es wieder verwendbar ist. Das Verfahren erlaubt anhand der verschiedenen Zustandsparameter, wie z. B. Dicke einer Werkstoffschicht, Alterung einer Werkstoffschicht und/oder Beschaffenheit einer Werkstoffschicht, Rückschlüsse auf die Funktionsfähigkeit, die Restlebensdauer und die eventuell erforderlichen Reparaturumfänge zu ziehen. Durch eine derartige zerstörungsfreie Überprüfung des Bauteils anhand der ermittelten Zustandsparameter in gegebenenfalls regelmäßigen Zeitabständen kann die zeitliche Entwicklung der Alterung des Bauteils bestimmt werden. Darüber hinaus kann das Verfahren automatisiert werden.

Ausführungsbeispiele der Erfindung werden anhand der Zeichnungen näher erläutert.

Es zeigen:
- Figur 1: eine schematische Darstellung einer erfindungsgemäßen Vorrichtung zur Untersuchung oder Diagnose eines betriebsbeanspruchten Bauteils, z.B. einer Turbinenschaufel, einer Brennkammerauskleidung,
- Figur 2: eine Turbinenschaufel,
- Figur 3: eine Brennkammer und
- Figur 4: eine Turbine.

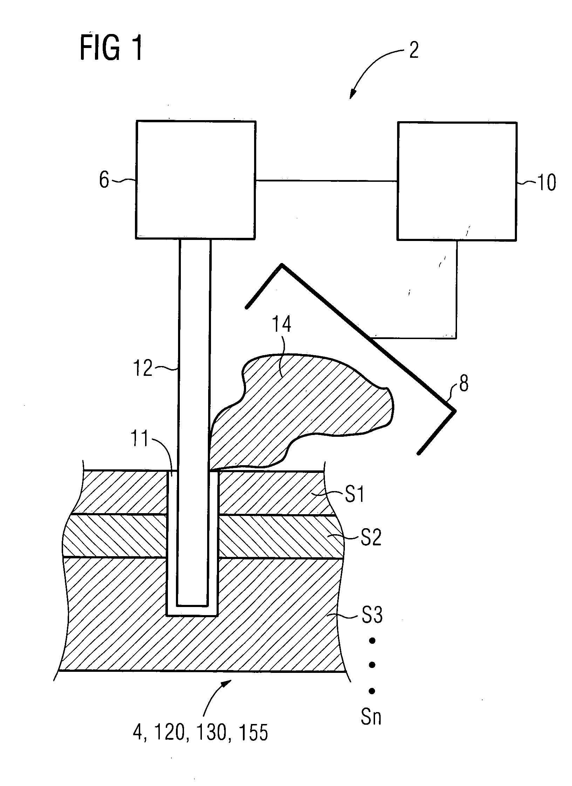

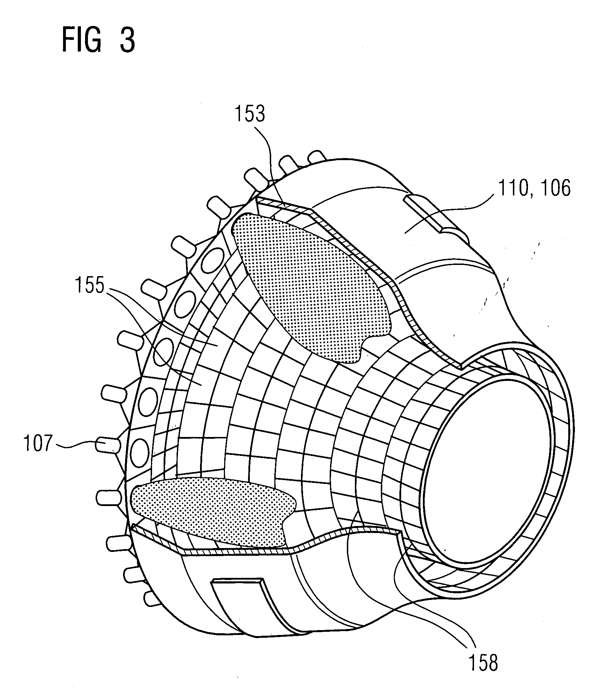

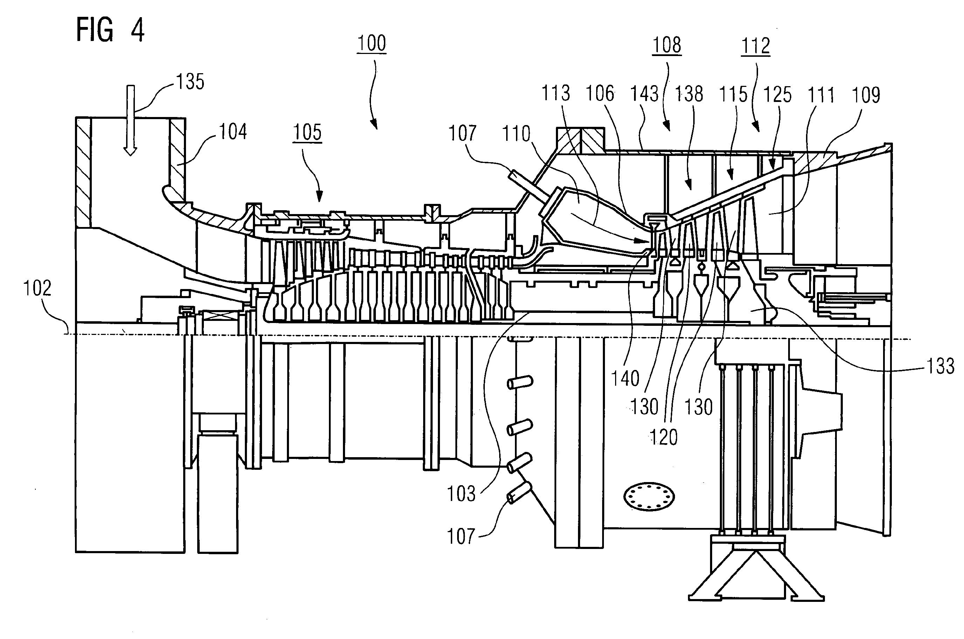

Wie aus der Figur 1 ersichtlich ist, umfasst die Vorrichtung 2 zur Untersuchung des betriebsbeanspruchten Bauteils 4, 120, 130 (Figur 4), 155 (Figur 3) eine Bohrvorrichtung 6, einen Detektor 8 und eine Auswerte- und Steuereinheit 10. Mit der Bohrvorrichtung 6 wird ein Bohrstrahl 12 erzeugt, beispielsweise ein Laserstrahl, ein Elektronenstrahl oder ein Ionenstrahl, mit dem das Bauteil 4 mit einer Testbohrung 11 automatisiert mit einem Bohrungsdurchmesser, beispielsweise von 100 µm bis 500 µm, insbesondere schichtweise, versehen wird. Mit einer schichtweise Testbohrung 11 wird die Entnahme von Bohrungsrückständen 14 in mehreren Schichten S1 bis Sn, insbesondere in Bauteilschichten und/oder Werkstoffschichten, verstanden. D. h., ist das Bauteil 4 aus einem einzigen Werkstoff, so werden die Bohrungsrückstände in mehreren Bauteilschichten mit jeweils einer Schichtdicke von 0,5 µm bis 1 µm entnommen. Weist das Bauteil 4 mehrere Werkstoffschichten auf, so können die Bohrungsrückstände je Werkstoffschicht und/oder mit anderer Schichtdicke entnommen werden.

Die mittels der Testbohrung 11, insbesondere schichtweise entnommenen Bohrungsrückstände 14, die beispielsweise als Werkstoffspäne und/oder Materialdämpfe auftreten, werden vom Detektor 8 aufgenommen und mittels der Auswerte- und Steuereinheit 10 automatisch fortlaufend schichtweise oder tiefenabhängig analysiert.

Dabei wird anhand der Zusammensetzung der Bohrungsrückstände 14 mindestens ein Zustandsparameter Z, z. B. die Dicke einer das Bauteil 4 charakterisierenden Schicht S1 bis Sn, z. B. einer Werkstoffschicht und/oder Bauteilschicht, ermittelt. Alternativ oder zusätzlich kann als Zustandsparameter Z die Alterung der verschiedenen Schichten S1 bis Sn, z. B. die Änderung der spezifischen Stoffeigenschaften der betreffenden Werkstoffschicht, bestimmt werden. Auch kann zusätzlich oder alternativ als Zustandsparameter Z die Beschaffenheit der jeweiligen Werkstoffschicht, beispielsweise die Dicke einer Verarmungszone der Turbinenschaufel, die Oberflächengestaltung, die Form und/oder die Struktur des Werkstoffs, z. B. die Rauheit, Unebenheit und/oder die Stoffstruktur, bestimmt werden.

Die Testbohrung 11 ist vorzugsweise zwischen 100 µm und 500 µm breit und stellt daher keine Beeinträchtigung für die Funktion des Bauteils 4 dar. Mittels der Testbohrung werden die Bohrungsrückstände für die jeweilige Schicht S1 bis Sn mit einer Dicke von 0,5 µm bis 1 µm entnommen.

Ein als Turbinenschaufel ausgeführtes Bauteil 4 weist beispielsweise als Schichten S1 bis Sn eine erste Schicht S1 als Schutzschicht, eine zweite Schicht S2 als Diffusionsschicht und dritte Schicht S3 als Grundwerkstoffschicht auf.

Die zweite Schicht S2, die unmittelbar auf den Grundwerkstoff aufgebracht ist, schützt den Grundwerkstoff vor Korrosion und/oder Hitze und ist beispielsweise ca. 180 µm bis 350 µm dick. Die zweite Schicht S2 besteht vorzugsweise aus einer Nickel- und/oder Kobaltlegierung (MCrAlY-Legierung, wobei M für Nickel und/oder Kobalt, Cr für Chrom, A1 für Aluminium und Y für Yttrium steht).

Die erste Schicht S1, die auf der zweiten Schutzschicht 16 aufgebracht ist, ist besonders hitze- und korrosionsbeständig ausgeführt, da diese erste Schicht S1 unmittelbar einer mechanischen und/oder thermischen Beanspruchung ausgesetzt ist. Die erste Schicht S1 schützt den Grundwerkstoff ebenfalls vor Korrosion und/oder Hitze und ist ca. 10 µm bis 50 µm dick und besteht vorzugsweise aus Zirkonoxid.

Die Erfindung beruht auf der Analyse der Bohrungsrückstände 14, aus denen sich beispielsweise als Zustandsparameter Z die aktuelle Dicke der jeweiligen Schicht S1 bis S3 bestimmen lässt. Aus der aktuell ermittelten Dicke der jeweiligen Schicht S1 bis S3 ist ein Rückschluss auf die verbleibende Restlebensdauer und/oder auf erforderliche Reparaturumfänge des Bauteils 4 möglich. Die Bohrungsrückstände 14 werden beispielsweise mittels Spektroskopie fortlaufend analysiert.

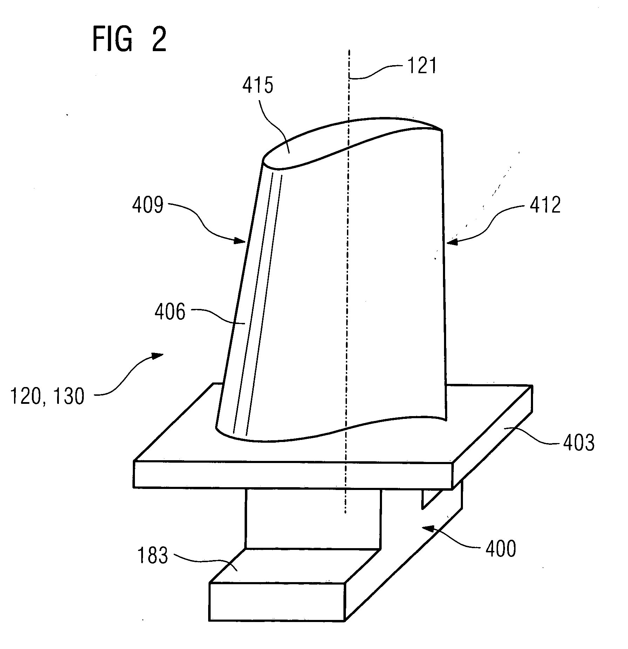

Figur 2 zeigt in perspektivischer Ansicht eine Schaufel 120, 130, als Beispiel für ein betriebsbeanspruchtes Bauteil 4, die sich entlang einer Längsachse 121 erstreckt.

Die Schaufel 120 kann eine Laufschaufel 120 oder Leitschaufel 130 einer Strömungsmaschine sein. Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf.
Als Leitschaufel 130 kann die Schaufel an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe verwendet.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.
Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.
Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher (nicht dargestellt) auf. Als Schutz gegen Korrosion weist die Schaufel 120, 130 beispielsweise entsprechende meistens metallische Beschichtungen auf und als Schutz gegen Wärme meistens noch eine keramische Beschichtung.

Die Figur 3 zeigt eine Brennkammer 110 einer Gasturbine mit Hitzeschildern 155 als Beispiel für ein betriebsbeanspruchtes Bauteil 4.
Die Brennkammer 110 ist beispielsweise als so genannte Ringbrennkammer ausgestaltet, bei der eine Vielzahl von in Umfangsrichtung um die Turbinenwelle 103 herum angeordneten Brennern 102 in einen gemeinsamen Brennkammerraum münden. Dazu ist die Brennkammer 110 in ihrer Gesamtheit als ringförmige Struktur ausgestaltet, die um die Turbinenwelle 103 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen. Jedes Hitzeschildelement 155 ist arbeitsmediumsseitig mit einer besonders hitzebeständigen Schutzschicht ausgestattet oder aus hochtemperaturbeständigem Material gefertigt. Aufgrund der hohen Temperaturen im Inneren der Brennkammer 110 ist zudem für die Hitzeschildelemente 155 bzw. für deren Halteelemente ein Kühlsystem vorgesehen.

Die Materialien der Brennkammerwand und deren Beschichtungen können ähnlich der Turbinenschaufeln sein.

Die Brennkammer 110 ist insbesondere für eine Detektion von Verlusten der Hitzeschildelemente 155 ausgelegt. Dazu sind zwischen der Brennkammerwand 153 und den Hitzeschildelementen 155 eine Anzahl von Temperatursensoren 158 positioniert.

Figur 4 zeigt schematisch in einem Längsschnitt eine Gasturbine 100 mit Schaufeln 120, 130 als Beispiel für ein betriebsbeanspruchtes Bauteil 4.
Entlang eines Zugankers 104 sind ein Verdichter 105, eine Brennkammer 110 und ein Turbinenteil 108 hintereinander angeordnet. Das Turbinenteil 108 weist einen Heißgaskanal 111 auf. Im Heißgaskanal 111 sind Gasturbinenschaufeln 120, 130 angeordnet. Leitschaufel- und Laufschaufelkränze sind wechselnd aufeinanderfolgend vorgesehen. Die Gasturbinenschaufeln 120, 130 werden beispielsweise über eine kombinierte Luft- und/oder Dampfkühlung gekühlt. Dazu wird beispielsweise dem Verdichter 105 Verdichterluft entnommen und über eine Luftführung 380 den Gasturbinenschaufeln 120, 130 zugeführt. Über eine Dampfzuführung 383 wird den Gasturbinenschaufeln 120, 130 beispielsweise auch Dampf zugeführt. Vorzugsweise stammt dieser Dampf aus einer Dampfturbine eines kombinierten Gas- und Dampfprozesses.

## Patentansprüche

1. Verfahren zur Diagnose eines betriebsbeanspruchten Bauteils (4), bei dem mindestens eine Testbohrung (11) in das betriebsbeanspruchte Bauteil (4) eingebracht wird und anhand der Zusammensetzung von bei der Testbohrung (11) entnommenen Bohrungsrückständen (14) das Bauteil (4) auf mindestens einen Zustandsparameter (Z) analysiert wird.

2. Verfahren nach Anspruch 1,
bei dem als Zustandsparameter (Z) die Dicke einer das Bauteil (4) charakterisierenden Schicht (S1 bis Sn), insbesondere Werkstoff- und/oder Bauteilschicht, ermittelt wird.

3. Verfahren nach Anspruch 1 oder 2,
bei dem als Zustandsparameter (Z) die Alterung einer das Bauteil (4) charakterisierenden Schicht (S1 bis Sn), insbesondere Werkstoff- und/oder Bauteilschicht, ermittelt wird.

4. Verfahren nach einem der Ansprüche 1 bis 3,
bei dem als Zustandsparameter (Z) die Beschaffenheit einer das Bauteil (4) charakterisierenden Schicht (S1 bis Sn), insbesondere Werkstoff- und/oder Bauteilschicht, ermittelt wird.

5. Verfahren nach einem der Ansprüche 1 bis 4,
bei dem mittels der Testbohrung (11) die Bohrungsrückstände (14) schichtenbezogen in mehreren Schichten (S1 bis Sn), insbesondere Werkstoff- und/oder Bauteilschichten, entnommen werden.

6. Verfahren nach Anspruch 5,
bei dem die Bohrungsrückstände (14) für die jeweilige Schicht (S1 bis Sn), insbesondere Werkstoff- und/oder Bauteilschicht, mit einer Dicke von 0,5 µm bis 1 µm entnommen werden.

7. Verfahren nach einem der Ansprüche 1 bis 6,
bei dem die Testbohrung (11) mit einem Durchmesser von 100 µm bis 500 µm eingebracht wird.

8. Verfahren nach einem der Ansprüche 1 bis 7,
bei dem die Testbohrung (11) mittels eines Laserstrahls oder eines Elektronenstrahls oder mittels eines Sputterverfahrens in das Bauteil (4) eingebracht wird.

9. Verfahren nach einem der Ansprüche 5 bis 8,
bei dem die je Schicht (S1 bis Sn), insbesondere Werkstoff- und/oder Bauteilschicht, entnommenen, insbesondere abgesputterten oder verdampften, Bohrungsrückstände (14) fortlaufend analysiert werden.

10. Verfahren nach einem der Ansprüche 5 bis 9,
bei dem die je Schicht (S1 bis Sn), insbesondere Werkstoff- und/oder Bauteilschicht, entnommenen Bohrungsrückstände (14) schichtweise und/oder tiefenabhängig mittels Spektroskopie analysiert werden.

11. Verfahren nach einem der Ansprüche 1 bis 10,
bei dem das betriebsbeanspruchte Bauteil (4) eine Turbinenschaufel ist.

12. Vorrichtung (2) zur Diagnose eines betriebsbeanspruchten Bauteils (4) mit einer Bohrvorrichtung (6) zum Durchführen mindestens einer Testbohrung (11) und mit einem Detektor (8) sowie einer Auswerte- und Steuereinheit (10) zur Ermittlung mindestens eines Zustandsparameters (Z) des Bauteils (4) anhand der Zusammensetzung von bei der Testbohrung (11) entnommenen Bohrungsrückständen (14).

13. Vorrichtung nach Anspruch 12, b
ei der die Testbohrung (11) eine Breite von 100 µm bis 500 µm aufweist.

14. Vorrichtung nach Anspruch 12 oder 13,
bei der die Bohrvorrichtung (6) einen Laserstrahl oder einen Elektronenstrahl oder einen Ionenstrahl erzeugt.

15. Vorrichtung nach einem der Ansprüche 12 bis 14,
bei der die Analyse- und Steuereinheit (10) als ein Spektrometer ausgebildet ist.
